(19) Europäisches Patentamt
European Patent Office
Office européen des brevets

(11) **EP 2 771 219 B1**

(12) **FASCICULE DE BREVET EUROPEEN**

(45) Date de publication et mention de la délivrance du brevet:
**21.11.2018 Bulletin 2018/47**

(21) Numéro de dépôt: **12791562.7**

(22) Date de dépôt: **24.10.2012**

(51) Int Cl.:
**B61B 13/04** *(2006.01)*    **B61K 9/00** *(2006.01)*

(86) Numéro de dépôt international:
**PCT/IB2012/055855**

(87) Numéro de publication internationale:
**WO 2013/061263 (02.05.2013 Gazette 2013/18)**

(54) **SYSTEME DE CONTROLE DYNAMIQUE DU ROULAGE DU OU DES GALETS DE GUIDAGE POUR UN ENSEMBLE DE GUIDAGE D'UN VEHICULE LE LONG D'AU MOINS UN RAIL**

**SYSTEM ZUR DYNAMISCHEN STEUERUNG DES ROLLENS DER FÜHRUNGSROLLE(N) FÜR EINE ANORDNUNG ZUM FÜHREN EINES FAHRZEUGS ENTLANG VON MINDESTENS EINER SCHIENE**

**SYSTEM FOR DYNAMIC CONTROL OF THE ROLLING OF THE GUIDE ROLLER(S) FOR AN ASSEMBLY FOR GUIDING A VEHICLE ALONG AT LEAST ONE RAIL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.10.2011   FR 1159794**

(43) Date de publication de la demande:
**03.09.2014   Bulletin 2014/36**

(73) Titulaire: **NewTL**
**67120 Duppigheim (FR)**

(72) Inventeur: **ANDRE, Jean-Luc**
**F-67120 Molsheim (FR)**

(74) Mandataire: **Nuss, Laurent**
**Cabinet Nuss**
**10, rue Jacques Kablé**
**67080 Strasbourg Cedex (FR)**

(56) Documents cités:
**DE-C- 322 611      DE-U1-202005 011 269
GB-A- 2 461 148      US-A- 4 089 272**

**Description**

L'invention se rapporte à un ensemble de guidage d'un véhicule terrestre, notamment un véhicule routier, notamment un véhicule de transport en commun, le long d'au moins un rail de guidage, l'ensemble de guidage étant muni d'un système de contrôle dynamique du contact au rail. Un ensemble de ce genre est connu du document GB 246 11 48 A par exemple.

Plus particulièrement, ce système de contrôle dynamique combine la génération et la reconnaissance d'un état vibratoire et l'indication d'une différence d'élévation du ou des éléments roulants de l'ensemble de guidage par rapport au(x) rail(s) de guidage en vue de délivrer une information sur le risque et l'état de déraillement et sur l'usure de ces éléments roulants ou du bandage de ceux-ci.

Une telle détection peut résulter d'une mesure ou d'une reconnaissance d'un état vibratoire et d'une mesure inductive à partir de capteurs situés sur l'ensemble de guidage pour signaler toute défaillance du guidage afin d'éviter des accidents suite à un déraillement en tout cas de minimiser les conséquences d'un déraillement. Il s'agit d'alerter sur un déraillement potentiel c'est-à-dire du début d'un déguidage en vue de procéder aux actions sécuritaires ou de sécurité.

Le guidage d'un véhicule par un ensemble de guidage le long d'au moins un rail par exemple au sol, n'est assuré que si les moyens de roulement sur le et le long de ce rail de guidage, restent en contact constant avec celui-ci.

La présente invention concerne notamment, mais non exclusivement le cas particulier du guidage par deux galets inclinés roulant sur les pistes inclinées d'un rail de guidage comme représenté sur les figures. Ces galets peuvent présenter chacun un mentonnet.

Le guidage est normal et en sécurité, quand les galets enserrent le rail. Généralement, la partie du galet qui est en contact avec le rail est en matière relativement souple, par exemple en caoutchouc ou en polyuréthanne. Mais dans tous les cas, cette partie du galet n'a pas les mêmes caractéristiques de raideur que le mentonnet qu'elle soit dans la même matière que celui-ci ou qu'elle soit dans une autre matière.

Les galets à mentonnet concernent un des modes préférés de réalisation de l'invention car on vise tous les types de galets ou roues de guidage. On peut très bien imaginer appliquer cette invention à des dispositifs de guidage qui comprennent un carter fixe en rotation lié au support du ou des galets et proéminent par rapport à la piste de roulement des galets.

Si le ou les galets de guidage arrivent en contact de roulage sur leur(s) pistes de roulement par leurs mentonnets ou par leur(s) carter(s), le véhicule équipé de l'ensemble de guidage suit encore sa trajectoire, mais le déraillement est à prévoir. Dans ce cas, la partie du guidage qui est en contact avec le rail est en acier. On a ainsi un contact fer sur fer. Puis, si les galets quittent le rail, comme les mentonnets ou le carter sont proéminents c'est-à-dire en saillie par rapport à ceux-ci, ces derniers viendront en contact avec la chaussée. Là encore, la signature vibratoire est différente.

De ce fait, on comprend bien que la signature vibratoire mesurée sur le support des galets de guidage est différente entre le cas du roulage-guidage et tous les autres cas.

Or, il existe de multiples causes de déviation de ces moyens de roulement puis de sortie du rail de guidage. Ce risque de déraillement peut être élevé, notamment dans les zones urbaines où les passages et les mouvements divers apportent des pollutions et rejets divers qui viennent s'ajouter aux débris et détritus amenés par les intempéries et les événements météorologiques exceptionnels.

Plusieurs solutions techniques anti-déraillement ont été trouvées permettant de garantir jusqu'à un certain point, la sécurité du guidage. Mais aucun des systèmes anti-déraillement passifs ne donne entièrement satisfaction au regard des grandes exigences de sécurité relatives au transport urbain de personnes.

Lorsque l'ensemble de guidage déraille, par exemple en cas d'interruption localisée du rail de guidage, de présence d'un obstacle ou d'un objet imprévu sur ou le long du rail de guidage, de gel ou de tout autre cause pouvant provoquer la levée accidentelle de l'ensemble de guidage. Le véhicule n'étant plus guidé, son conducteur n'a que pour seule solution de le stopper pour qu'il soit à nouveau positionné correctement au dessus du rail de guidage par une intervention extérieure.

Il existe un besoin d'une solution de détection précoce et en temps réel du risque de déraillement et du déraillement.

La présente invention, telle qu'elle est décrite dans la revendication 1, constitue une solution adaptée qui permet de satisfaire à ce besoin et en plus, de détecter la limite d'usure ou la détérioration du bandage des galets de guidage. L'ensemble de guidage selon la présente invention permet d'assurer une surveillance constante et en temps réel du roulement du ou des galets ou roues de guidage sur le rail de guidage en vue d'émettre une alarme à la moindre déviation ou modification d'élévation ou de trajectoire de ce ou de ces galets et plus généralement de l'ensemble de guidage dont ils font partie.

Si ce système de contrôle dynamique du roulage et du contact avec le rail de guidage détecte que le système de guidage s'écarte du rail avec lequel il doit rester en contact c'est-à-dire que la signature vibratoire a changé, et que sa distance verticale par rapport au rail a augmenté, un signal d'alerte prévient le système de surveillance et de sécurité ainsi que le conducteur du véhicule qui agit en conséquence en appliquant les consignes de sécurité en fonction de la gravité de l'incident. Ce même signal d'alerte peut également déclencher l'actionnement de dispositifs de sécurité, provoquant par exemple l'arrêt du véhicule ou l'engagement d'un dispositif actif d'anti-déraillement ou de réenraillement. L'ensemble de guidage selon l'invention permet aussi de détecter l'usure ou la détérioration du bandage des galets constituant les moyens de roulement de l'ensemble de guidage sur le rail. Il assure ainsi une surveillance liée à la sécurité et à l'entretien pour le remplacement de ce bandage.

Ainsi, le but de l'invention est double. Elle permet d'abord d'assurer une surveillance constante du bon fonctionnement du guidage et de prévenir au plus tôt un déguidage. Elle permet ensuite un entretien préventif en détectant l'usure normale ou excessive du bandage des galets.

A cet effet, l'invention concerne un ensemble de guidage d'un véhicule routier par déplacement le long d'au moins un rail de guidage notamment au sol, muni d'un système de contrôle dynamique du contact avec le rail. Un tel ensemble de guidage doit pouvoir fonctionner dans toutes les situations normales de déplacement ou d'arrêt du véhicule, c'est-à-dire dans les deux sens de marche, sur toute la plage des vitesses autorisées, lors du passage d'aiguillages, de croisements ou de joints de dilatation, lors de roulage en virage serré, lors d'un freinage, etc. Par ailleurs, puisque la non-détection d'un déguidage est un événement particulièrement redouté, le taux de défaillance du système doit être le plus faible possible.

Selon l'invention ce système de contrôle dynamique du guidage et du contact avec le rail comprend au moins un capteur avec un moyen de génération d'un signal vibratoire associé à un moyen de reconnaissance d'un régime vibratoire traduisant un état critique de guidage ou d'usure du ou des galets ou du bandage de ceux-ci et un capteur de proximité rendant compte de l'élévation du ou des galets ou de l'ensemble de guidage par rapport au rail. L'analyse combinée des signaux de ces deux capteurs permet de conclure à un déraillement ou à un déguidage. L'alerte seule du capteur vibratoire signale soit un défaut du capteur, soit un bandage défectueux. L'alerte seule du capteur de proximité signale un défaut de ce capteur. L'existence des deux alertes ci-dessus permet de conclure à un déraillement.

Le moyen de détection assurant la génération d'un signal vibratoire comprend de préférence au moins un accéléromètre solidaire de l'élément mécanique de reprise de chaque paire de galets de guidage. Le signal de sortie de l'accéléromètre ou de chaque accéléromètre est traité et analysé par exemple en fréquences puis une comparaison est effectuée pour en déterminer une information sur l'état de bon fonctionnement de l'ensemble de guidage.

Le capteur de proximité est de préférence de nature inductive. Il comprend un capteur inductif qui surveille la cote entre une référence fixe sur l'ensemble de guidage par exemple l'axe de reprise inférieur des galets de guidage et le dessus du rail de guidage. Cette cote est pratiquement invariable tant qu'il n'y a pas de déguidage. Elle peut se réduire faiblement au cours du temps avec l'usure normale du bandage des galets. On s'affranchit ainsi de la mécanique du guidage, celle du véhicule et de l'infrastructure.

Les sorties des capteurs d'accélération et du capteur inductif de proximité sont facilement accessibles, et raccordés par des connecteurs, en vue d'une maintenance rapide et aisée.

Ces capteurs sont particulièrement résistants aux écarts de température, à l'usure, aux chocs et aux vibrations, ce qui assure la fiabilité du système de contrôle dynamique de l'invention pour une longue durée.

En outre, la combinaison de deux technologies redondantes, ne présentant pas de mode commun de défaillance, permet de diminuer considérablement les risques de panne globale du dispositif de contrôle dynamique de l'invention.

Ce dispositif de contrôle dynamique du contact au rail comprend de nombreux autres avantages, parmi lesquels on peut citer ceux selon lesquels :

- il fonctionne avec des bandages non homogènes entre les galets droite et gauche d'un même guidage ou de guidages avant et arrière ;
- il fonctionne quel que soit le sens de la marche, ou la vitesse ;
- il ne nécessite pas de réglage ou de calibrage sur la rame ; ainsi, il est immédiatement opérationnel après la mise en marche du véhicule ;
- il est insensible aux conditions normales d'utilisation : passage d'aiguillages, de croisements, de systèmes de dilatation ou de systèmes de contrôle d'enraillement, roulage contre le mentonnet des galets de guidage en virage serré, freinage d'urgence, etc. ; et
- il fonctionne aussi bien sur un essieu d'extrémité que sur un essieu intermédiaire du véhicule.

Enfin, le système de contrôle dynamique du roulage et du contact au rail peut fournir d'autres informations hormis celles sur le déraillement. Il peut fournir par exemple, des signaux dont la forme et la fréquence indiquent l'usure des éléments de guidage ou de leur bandage ou une défaillance de ceux-ci.

D'autres caractéristiques et avantages de l'invention apparaîtront à la lecture de la description détaillée qui va suivre, description faite en référence aux dessins annexés, dans lesquels :

- la figure 1 est une vue de dessus d'un essieu de véhicule guidé par un ensemble de guidage à deux paires de galets comprenant chacune un système de contrôle dynamique du contact ;
- la figure 2 est une vue de détail de la partie encerclée sur la figure 1 ;
- la figure 3 est une vue en perspective de la figure 2 ;
- la figure 4 est une vue en coupe transversale du système de guidage au niveau de la ligne de coupe transversale représentée sur la figure 2 ;
- la figure 5 est une vue en coupe longitudinale du système de guidage au niveau de la ligne de coupe longitudinale représentée sur la figure 2 ;

- la figure 6 est un schéma synoptique à blocs montrant la composition du système,
- la figure 7 est un tableau-organigramme illustrant un exemple d'analyse du signal à exploiter provenant des capteurs ;
- la figure 8 est un graphique comparatif de deux spectres en fréquences de puissance moyenne sur un parcours provenant d'un accéléromètre avec dans la partie du haut la signature en fréquences dans le cas d'un déguidage et dans la partie du bas la signature en fréquences dans le cas d'un fonctionnement normal de guidage,
- la figure 9 est un graphique comparatif de trois spectres en fréquences de puissance moyenne sur un parcours provenant d'un accéléromètre avec respectivement du haut vers le bas un galet usé à 100 %, un galet usé à 50% et un galet neuf.

Pour des raisons de simplification, on utilisera ci-après le terme de galet de guidage. Il est bien entendu que par « galet(s) », il faut comprendre de façon très générale, tout élément roulant se déplaçant sur un rail notamment y compris, les roues ferroviaires ou de tramway.

La présente invention procède de l'idée générale inventive selon laquelle on utilise un système de contrôle dynamique 1 sur un ensemble de guidage 2 d'un véhicule quelconque le long d'au moins un rail de guidage 3 notamment au sol 4, dans lequel il existe au moins un capteur vibratoire 5, par exemple un accéléromètre 6, et au moins un capteur de proximité 7, par exemple un capteur inductif 8, portés ou fixés sur cet ensemble de guidage 2 au voisinage d'au moins un galet 9 ou d'au moins un couple de galets de guidage 9 et on exploite les signaux de ces capteurs 5, 7 pour déterminer un déguidage, l'état de déraillement et la simple usure du bandage des galets de guidage 9.

Plus particulièrement, on traite les signaux émanant de chaque capteur vibratoire 5 en les analysant en fréquences et on compare le niveau du signal du capteur de proximité 7 à une référence de distance pour déterminer si les signaux du ou des capteurs vibratoires 5 traduisent une détérioration ou une usure des galets de guidage 9 ou encore un déraillement s'il y a concomitance des deux alarmes fournies par les ensembles de détection.

On décrira ci-après plus en détail ces moyens et la mise en oeuvre de ceux-ci en référence aux différentes figures.

A titre d'illustration, le système de contrôle dynamique 1 de l'ensemble selon l'invention est décrit ici monté sur un ensemble de guidage 2 prévu pour un véhicule terrestre guidé le long d'un rail central 3 notamment au sol 4. Bien entendu, ce système 1 n'est pas spécifique à ce type d'ensemble de guidage et il peut être adapté et utilisé avec n'importe quel système de guidage par contact sur au moins un rail de guidage.

Dans le système de guidage décrit comme mode de réalisation préféré, chaque essieu ou cadre d'essieu 10 du véhicule guidé utilise un ensemble de guidage 2 comprenant deux paires de galets de guidage 9, à savoir une paire 11 de galets meneurs 12 et 13 situés vers l'avant dans le sens de la marche, et une paire 14 de galets suiveurs 15 et 16 situés vers l'arrière dans le sens de la marche, ce qui permet au véhicule de circuler dans les deux sens. Bien entendu, on comprend que si le véhicule est unidirectionnel, il n'a qu'un système de guidage situé vers l'avant dans le sens de la marche.

Les galets de guidage 9 sont de préférence du type à mentonnets tels que 17 et à bande de roulement 24 souple ou du moins d'une autre caractéristique de raideur mécanique que les mentonnets à savoir une raideur inférieure.

Il peut aussi s'agir de galets sans bande ou bandage de roulement. La surface périphérique de roulage du ou des galets est alors spéciale et notamment de nature composite présentant une raideur radiale différente, notamment inférieure à celle des mentonnets ou partie proéminente des galets ou au voisinage de ceux-ci et par exemple à celle rail.

Le même effet peut être obtenu par un galet entièrement métallique dont la périphérie roulante est réalisée en matière de moindre raideur que les mentonnets ou la partie proéminente ou dont l'axe de rotation comporte un palier ou est réalisé en matière plus souple que son corps.

Chaque essieu ou cadre d'essieu 10 est orienté par un bras 18 et 19 portant une paire 11, 14 de galets 9 inclinés en V dont la partie inférieure est en contact avec les chants latéraux 20 et 21 inclinés et en chanfrein du rail de guidage 3. Cette paire 11, 14 de galets directeurs 9 suit le rail de guidage 3 en roulant sur les chants latéraux 20 et 21 utilisés comme piste et oriente l'essieu ou le cadre essieu 10 à la manière d'un timon de remorque. Tous les efforts latéraux, par exemple provoqués par le vent ou la force centrifuge, sont repris par les pneus 22 et 23 relatifs au cadre-essieu 10 et au véhicule. Seuls les efforts nécessaires à l'orientation des cadre-essieux 10 sont repris par l'ensemble de guidage 2.

Les galets 9 et les chants latéraux 20 et 21 en chanfrein du rail de guidage 3 sont inclinés à 45°, ce qui permet de réduire la charge verticale sur les galets 9 et de transmettre les efforts sur le rail de guidage 3 par roulement des galets 9 et non par frottement des mentonnets 17 sur le rail de guidage 3.

Pour des raisons de confort et surtout de moindre bruit et de manière à ne pas user le rail, les galets 9 présentent souvent un bandage de roulage tel que 24 en matière souple par lequel ils sont et restent normalement en contact avec le rail de guidage 3 et qui assure un contact doux avec celui-ci. Le désavantage de cette matière est qu'elle s'use avec le temps de roulage, ce qui nécessite son remplacement. On peut aussi imaginer que cette partie soit aussi en acier, mais d'une forme appropriée pour être plus souple radialement et donc de

On peut également obtenir une signature vibratoire différente entre la zone périphérique roulante et les mentonnets ou la partie proéminente du support des galets en ménageant un ou plusieurs reliefs ou creux locaux répétitifs ou non sous la forme de stries ou de méplats ou changements de formes ou autres par exemple à la périphérie des mentonnets.

De façon exceptionnelle, il peut en être inversement au sujet de la différence des raideurs à savoir les caractéristiques de raideur du ou des mentonnets et, ou de la partie proéminente sont inférieures aux caractéristiques de raideur de la périphérie roulante des galets.

L'ensemble de guidage 2 se compose en outre d'un soc coulissant avant 25 dit chasse-pierre, d'une structure de support à bras obliques 26 et 27, d'un ressort 28 assurant une contrainte permanente vers le bas, de deux axes de pivotement 29 et 30 pour son relevage, de patins tels que 31 et 32 pour les galets, ainsi que divers liaisons électriques 33, 34 et 35 de retour du courant d'alimentation du véhicule en énergie électrique.

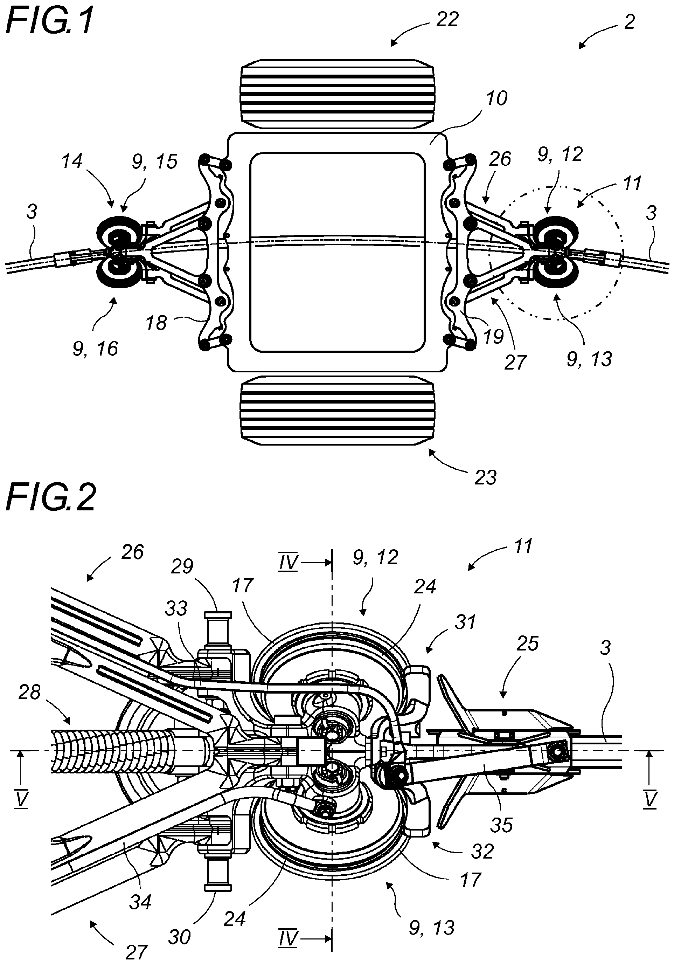

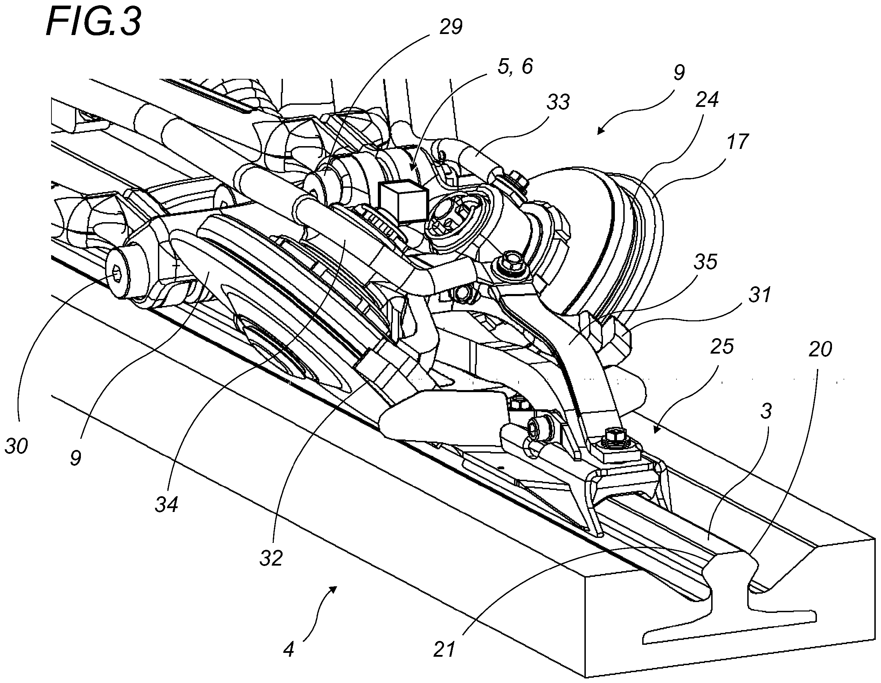

Selon l'invention, on prévoit un capteur vibratoire 5 au voisinage de chaque paire 11, 14 de galets 9 qui va émettre des signaux traduisant l'état vibratoire de l'ensemble mécanique formé des deux galets 12 et 13, 15 et 16 d'une même paire 11, 14 de galets 9 et de leur support comme représenté sur les figures 2 à 5.

Il y a un avantage en précision de détection à placer le capteur vibratoire 5 le plus près possible de la paire 11, 14 de galets 9.

Lorsque chaque galet 9 roule normalement avec son bandage 24 en matière souple sur sa piste inclinée de roulage 20 et 21 sur le rail de guidage 3, la signature en fréquences ou le spectre du signal du capteur vibratoire 5 présente une forme donnée. Si le galet 9 ou une partie de celui-ci roule ou frotte sur le rail 3, le contact fer sur fer engendre une vibration différente et la signature vibratoire par exemple en fréquences du capteur vibratoire 5, c'est-à-dire sa décomposition en fréquences, présente une forme et un contenu différents. On peut ainsi par comparaison, détecter un problème quelconque au niveau d'au moins un des galets 9, par exemple une usure de son bandage 24 en matière souple ou un déguidage.

Pour lever le doute quant à la nature du problème détecté par le capteur vibratoire 5, notamment entre une usure ou une détérioration du bandage 24 et un déguidage, on utilise un capteur de proximité 7 sous la forme par exemple du capteur inductif 8 de proximité qui indique en permanence sa distance notamment verticale par rapport à une surface de référence.

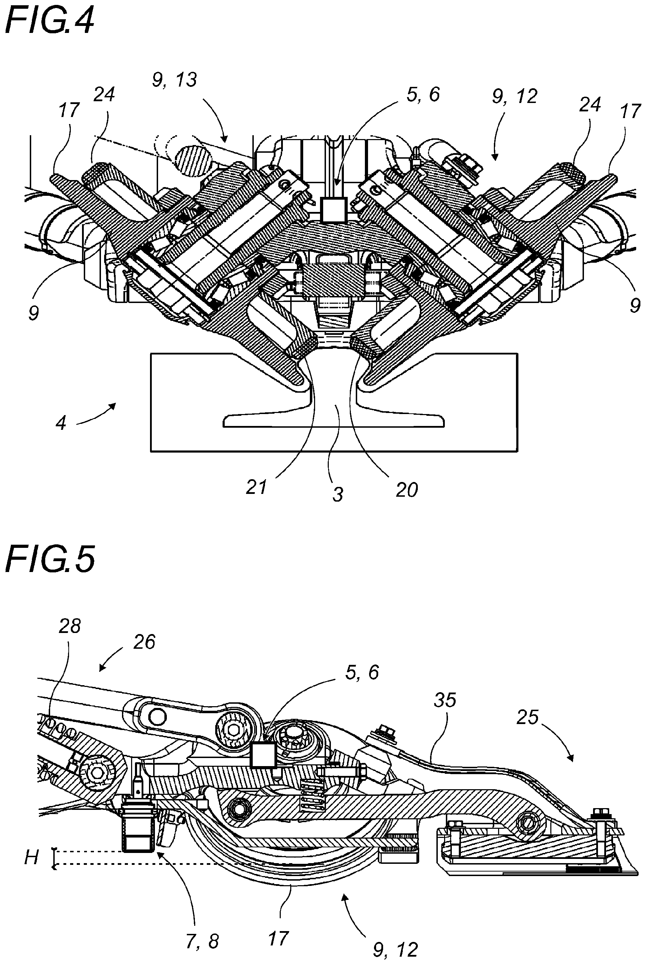

Ce capteur de proximité 7 est monté sur l'ensemble de guidage 2 en un endroit qui lui permet de donner une indication peu parasitée de la distance par rapport à une surface de référence notamment sa distance par rapport à la surface supérieure du rail de guidage 3 qui est appelée ci-après cote H et identifiée sur la figure 5.

En cas de problème détecté par l'analyse du signal du capteur vibratoire 5, et si la valeur de la cote H est supérieure à sa valeur normale c'est-à-dire à celle correspondant à un fonctionnement normal de guidage de l'ensemble de guidage 2, on se trouve dans un cas de déguidage, c'est-à-dire de galets de guidage 9 ne roulant plus normalement sur le rail de guidage 3 par contact par leur bandage ou dans un cas de défaillance du capteur. Si la valeur de H mesurée par le capteur de proximité reste à peu près constante et proche de sa valeur normale, et en présence d'une alarme vibratoire on peut suspecter une usure ou une détérioration du bandage des galets. En tout cas, à chaque fois qu'il existe une alarme vibratoire conjointement avec une alarme de proximité déclenchée par le détecteur de proximité, on peut conclure à un déguidage.

Par construction, il se trouve que le capteur vibratoire 5 et le capteur de proximité 7 sont préférentiellement montés à proximité des câbles 33, 34 et 35 de retour de courant du véhicule.

Afin d'éviter tout parasitage électromagnétique pour le signal qu'ils émettent, le capteur vibratoire 5 et le capteur de proximité 7 sont raccordés à une unité de traitement par des câbles blindés.

Les capteurs formant le capteur vibratoire 5 et le capteur de proximité 7 sont souvent des émetteurs, c'est-à-dire qu'ils fournissent un signal correspondant aux valeurs auxquelles ils sont sensibles. Il peut s'agir aussi d'éléments passifs dont les caractéristiques électriques changent. Ce type de capteur sera alors bien entendu, monté dans un circuit de détection approprié.

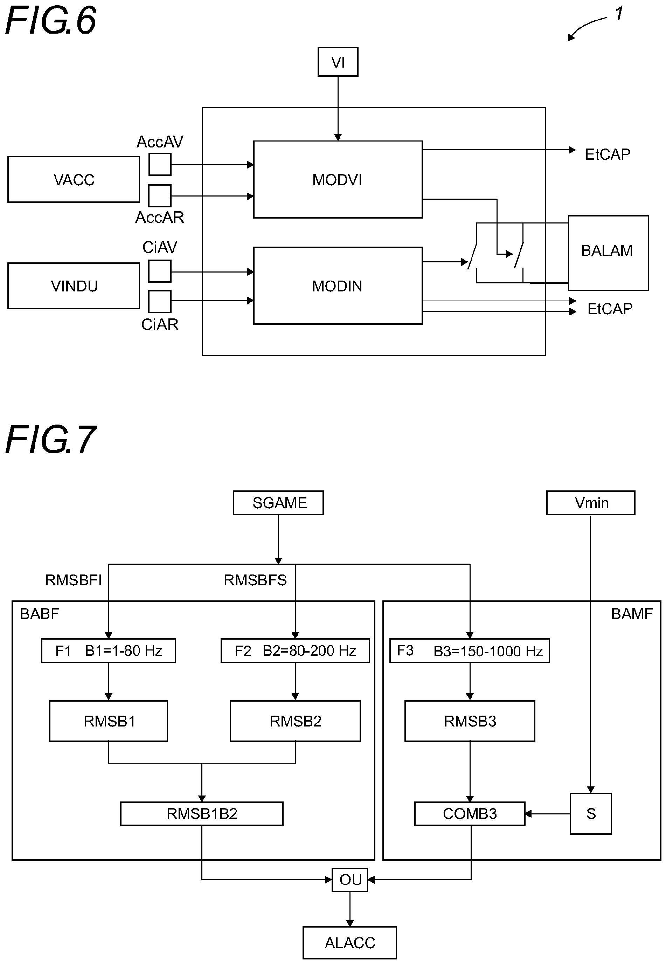

Comme représenté sur la figure 6, l'unité de traitement et d'analyse des signaux délivrés par les capteurs vibratoire 5 et de proximité 7 comprend en parallèle une voie accéléromètrique VACC comportant un module de traitement vibratoire MODVI et une voie inductive VINDU avec un module de traitement inductif MODIN.

Les modules de traitement sont respectivement raccordés aux capteurs vibratoires 5 avant et arrière AccAV et AccAR pour l'un et aux capteurs de proximité 7 avant et arrière CiAV et CiAR pour l'autre. Ils comportent diverses sorties dont pour chacun, une sortie EtCAP fournissant une information sur l'état des capteurs et pour chacun une sortie principale aboutissant à un bloc multivoies d'alarmes BALAM.

Le module de traitement vibratoire MODVI de la figure 6 reçoit les informations de vitesses VI et les signaux des capteurs vibratoires 5 avant et arrière AccAV et AccAR. Il est représenté schématiquement sur la figure 7.

Il se compose de deux blocs de traitement et d'analyse à partir de gammes de fréquences vibratoires : un premier bloc de basses fréquences BABF et un bloc adjacent de moyennes fréquences BAMF.

A partir du signal du ou des capteur(s) vibratoire(s) 5 mesuré, SGAME, on alimente les blocs de traitement BABF et BAMF.

Le premier bloc BABF comporte deux voies, une première voie de niveau moyen de basses fréquences inférieures RMSBFI et une deuxième voie de niveau moyen basses fréquences supérieures RMSBFS. Chaque voie débute par un filtre respectivement passe-bas F1 dans la gamme B1 de 1-80Hz et un filtre passe-bande F2 dans la gamme B2 de 80-200Hz qui sont suivis par un module de mesure du niveau de la tension efficace respectivement en basses fréquences inférieures B1 module RMSB1 et en basses fréquences supérieures B2 module RMSB2.

Les deux niveaux sont comparés dans un module de différenciation RMSB1 B2.

Si leur différence est supérieure à un seuil correspondant à un niveau donné par exemple 6dB, on déclenche une alerte accélérométrique ALACC.

Le bloc d'analyse adjacent de moyennes fréquences BAMF est alimenté aussi par le signal de(s) capteur(s) vibratoire(s) 5 mesuré SGAME. Il présente une voie composée d'un filtre passe-bande moyennes fréquences supérieure F3 dans la gamme B3 de 150-1000Hz suivi par un module de mesure du niveau de la tension efficace des moyennes fréquences supérieures B3 module RMSB3. Ce niveau est comparé à un seuil S dans un comparateur COMB3.

Ce seuil S diffère selon que l'on se trouve au-dessus ou en dessous d'une vitesse minimale du véhicule Vmin par exemple 15 km/h. On attribue par un encodeur une valeur différente du seuil S si la vitesse du véhicule est inférieure ou supérieure à Vmin.

Par exemple :

$$Vmin > 15km/h \qquad S = 9$$

$$Vmin < 15 \ km/h \qquad S = 3$$

Le comparateur COMB3 émet un signal d'alarme si le niveau de la tension efficace du signal B3 est supérieur à la valeur du seuil S.

Les deux signaux d'alerte des deux blocs de traitement sont autorisés sur la voie d'alerte accélérométrique ALACC par un bloc logique OU.

En se référant maintenant au schéma synoptique général de la figure 6, on comprend que le dépassement de la valeur de la cote H par rapport à sa valeur de consigne, correspondant à la surface de référence et conjointement au dépassement d'un niveau efficace de seuil pour les bandes de fréquences mesurées du signal des capteurs vibratoires 5 permet de conclure à un déraillement.

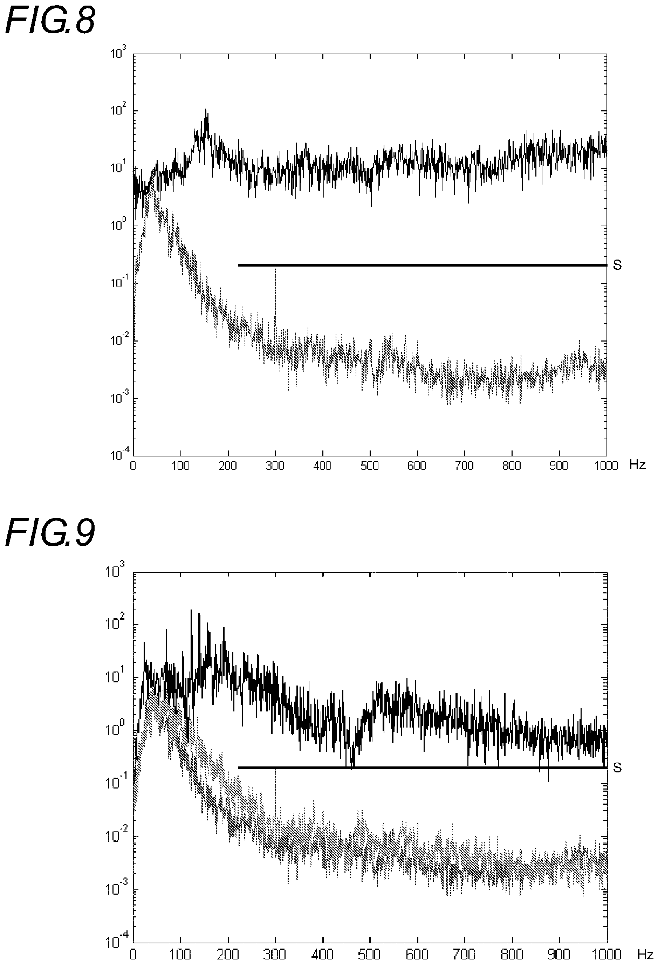

Les figures 8 et 9 montrent de façon comparative un exemple des signatures en fréquences au niveau d'un capteur vibratoire 5 sous la forme d'un accéléromètre 6. A chaque fois, on se réfère à un mode guidé normal dont la signature se trouve en partie inférieure de chaque figure.

Sur la figure 8 par comparaison de la signature en mode guidé, avec la signature en mode déguidé qui se trouve en partie supérieure, on remarque un niveau moyen plus élevé dans le cas d'un déguidage avec un pic en basses fréquences. On peut ainsi détecter facilement un déguidage.

Sur la figure 9 les caractéristiques des spectres sont différents entre le galet neuf et le galet usé ou à garniture ou bandage usé. Le spectre du galet usé à 50 % est proche de celui du galet neuf en mode guidé. Ce n'est qu'à partir d'une usure très prononcée que les spectres varient franchement. Ainsi, le spectre de galet(s) usé(s) à 100 % est situé en partie supérieure et de forme différente. Par contre, les usures intermédiaires se traduisent par des spectres voisins et proches de celui du galet neuf en mode guidé, ce qui nécessite de lever le doute par l'indication provenant du capteur de proximité conformément à l'invention. Cette indication supplémentaire provenant du capteur de proximité permet de conclure soit à un déguidage soit à une usure du ou des ou du ou des bandages de celui-ci ou de ceux-ci ou à des défauts des capteurs.

En utilisation, selon le ou les moyens du système de contrôle dynamique 1 de l'invention qui détecte(nt) un défaut de contact au rail 3 et selon que ce défaut se trouve au niveau d'une paire 11 de galets meneurs 12 et 13 et/ou au niveau d'une paire 14 de galets suiveurs15 et 16, un signal d'alarme différent peut être fournit, permettant ainsi d'adapter les mesures à prendre pour éviter le déraillement. Parmi les mesures à prendre, on peut par exemple, énumérer une diminution de la vitesse du véhicule, un arrêt d'urgence du véhicule, le déclenchement d'un dispositif actif anti-déraillement, ou de réenraillement ou toute autre action adaptée.

Dans ce but, le dispositif de contrôle dynamique de l'invention utilise préférentiellement une interface de traitement analogique, permettant de réaliser une fonctionnalité de détection de déguidage sans utiliser de logique programmée.

De manière évidente, l'invention ne se limite pas au mode de réalisation préférentiel décrit précédemment et représenté sur les différentes figures, l'homme du métier pouvant y apporter de nombreuses modifications et imaginer d'autres variantes sans sortir ni de la portée, ni du cadre de l'invention.

**Revendications**

1. Ensemble de guidage (2) d'un véhicule terrestre le long d'au moins un rail de guidage (3), l'ensemble de guidage (2) étant muni d'un système de contrôle dynamique (1) du contact au rail, l'ensemble de guidage (2) étant formé d'au moins un galet (9) ou d'au moins une paire (11, 14) de galets de guidage (9) roulant le long du au moins un rail de guidage (3), l'ensemble de guidage (2) présentant deux états différents, un premier état dans lequel l'au moins un galet (9) ou l'au moins une paire (11, 14) de galets roule(nt) sur l'au moins un rail de guidage (3) par leur bande, leur surface de roulement ou leur périphérie roulante en situation normale de guidage et un deuxième état dans lequel une partie autre de l'ensemble de guidage (2) par exemple du ou des galets ou une surface proéminente du support des galets roule ou frotte sur le rail de guidage (3) ou sur la chaussée en situation déraillée, **caractérisé en ce que**, les caractéristiques vibratoires de la périphérie roulante du galet ou des galets en contact normal de roulage avec le rail de guidage (3) lors du guidage et celles de la zone en contact avec le rail de guidage (3) ou la chaussée en situation déraillée étant différentes, le système de contrôle dynamique (1) comporte un capteur vibratoire (5) situé près du au moins un galet (9) ou de l'au moins une paire (11, 14) de galets de guidage (9) et un capteur de proximité (7) et le système de contrôle dynamique (1) comporte une unité de traitement et d'analyse des signaux issus de ces capteurs (5, 7) ou des circuits dans lesquels ils sont placés pour les analyser et déterminer en permanence si ceux issus du capteur vibratoire (5) et ceux issus du capteur de proximité (7) dépassent respectivement un premier et un second seuil d'alerte de façon que si les deux seuils sont dépassés on émette une alerte de déraillement.

2. Ensemble de guidage (2) selon la revendication 1, **caractérisé en ce que** la raideur de la partie du galet ou des galets en contact normal de roulage avec le rail lors du guidage est inférieure à la raideur de la zone en contact avec le rail ou la chaussée en situation déraillée.

3. Ensemble de guidage (2) selon la revendication 1, **caractérisé en ce que** la partie en proéminence est le mentonnet de chaque galet ou un carter ou une surface fixe en rotation sur le support des galets.

4. Ensemble de guidage (2) selon la revendication 1, **caractérisé en ce que** le dépassement du premier seuil d'alerte correspond à un défaut du capteur vibratoire (5).

5. Ensemble de guidage (2) selon la revendication 1, **caractérisé en ce que** le capteur de proximité (7) est un capteur de proximité de la surface supérieure du rail de guidage (3).

6. Ensemble de guidage (2) selon la revendication 1, **caractérisé en ce que** le capteur de proximité (7) est un capteur inductif (8).

7. Ensemble de guidage (2) selon la revendication 1, **caractérisé en ce que** le capteur vibratoire (5) est un accéléromètre (6).

8. Ensemble de guidage (2) selon la revendication 1, **caractérisé en ce que** l'on établit un seuil en fonction de la vitesse du véhicule.

9. Ensemble de guidage (2) selon la revendication précédente, **caractérisé en ce que** le seuil fonction de la vitesse du véhicule est modifié si la vitesse du véhicule est supérieure à 15 km/h.

10. Ensemble de guidage (2) selon la revendication 1, **caractérisé en ce que** l'unité de traitement et d'analyse des signaux issus des capteurs est une unité de traitement et d'analyse du spectre en fréquences.

11. Ensemble de guidage (2) selon la revendication 10, **caractérisé en ce que** l'unité de traitement et d'analyse des signaux délivrés par les capteurs vibratoire (5) et de proximité (7) comprend en parallèle une voie accéléromètrique VACC comportant un module de traitement vibratoire MODVI et une voie inductive VINDU avec un module de traitement inductif MODIN **en ce que** les modules de traitement sont respectivement raccordés aux capteurs vibratoires (5) avant et arrière AccAV et AccAR pour l'un et aux capteurs de proximité (7) avant et arrière CiAV et CiAR pour l'autre **en ce qu'**ils comportent diverses sorties dont pour chacun, une sortie EtCAP fournissant une information sur l'état des capteurs et pour chacun une sortie principale aboutissant à un bloc multivoies d'alarmes BALAM et **en ce que** le module de traitement vibratoire MODVI reçoit les informations de vitesses VI et les signaux des capteurs vibratoires (5) avant et arrière AccAV et AccAR et se compose de deux blocs de traitement et d'analyse à partir de gammes de fréquences vibratoires : un premier bloc de basses fréquences BABF et un bloc adjacent de moyennes fréquences BAMF.

12. Ensemble de guidage (2) selon la revendication précédente, **caractérisé en ce qu'**à partir du signal du ou des capteur(s) vibratoire(s) (5) mesuré, SGAME, on alimente les blocs de traitement BABF et BAMF.

13. Ensemble de guidage (2) selon les revendications 11 et 12, **caractérisé en ce que** le premier bloc BABF comporte deux voies, une première voie de niveau moyen de basses fréquences inférieures RMSBFI et une deuxième voie de niveau moyen basses fréquences supérieures RMSBFS **en ce que** chaque voie débute par un filtre respectivement passe-bas F1 dans la gamme B1 de 1-80Hz et un filtre passe-bande F2 dans la gamme B2 de 80-200Hz qui sont suivis par un module de mesure du niveau de la tension efficace respectivement en basses fréquences inférieures B1 module RMSB1 et en basses fréquences supérieures B2 module RMSB2 **en ce que** les deux niveaux sont comparés dans un module de différenciation RMSB1B2 pour dans le cas où si leur différence est supérieure à un niveau donné, on déclenche une alerte accélérométrique ALACC.

14. Ensemble de guidage (2) selon la revendication précédente, **caractérisé en ce que** le bloc d'analyse adjacent de moyennes fréquences BAMF est alimenté aussi par le signal de(s) capteur(s) vibratoire(s) (5) mesuré SGAME **en ce qu'**il présente une voie composée d'un filtre passe-bande moyennes fréquences supérieure F3 dans la gamme B3 de 150-1000Hz suivi par un module de mesure du niveau de la tension efficace des moyennes fréquences supérieures B3 module RMSB3 **en ce que** ce niveau est comparé à un seuil S dans un comparateur COMB3 **en ce que** si ce seuil S diffère selon que l'on se trouve au-dessus ou en dessous d'une vitesse minimale du véhicule Vmin on attribue par un encodeur une valeur différente du seuil S si la vitesse du véhicule est inférieure ou supérieure à Vmin, le comparateur COMB3 émet un signal d'alarme si le niveau de la tension efficace du signal B3 est supérieur à la valeur du seuil S **en ce que** les deux signaux d'alerte des deux blocs de traitement sont autorisés sur la voie d'alerte accélérométrique ALACC par un bloc logique OU.

**Patentansprüche**

1. Führungseinheit (2) eines Landfahrzeugs entlang wenigstens einer Führungsschiene (3), wobei die Führungseinheit (2) mit einem System (1) zur dynamischen Überwachung des Schienenkontaktes ausgestattet ist, wobei die Führungseinheit (2) von wenigstens einer Rolle (9) oder von wenigstens einem Paar (11, 14) von Führungsrollen (9) gebildet ist, welche entlang der wenigstens einen Führungsschiene (3) rollen, wobei die Führungseinheit (2) zwei verschiedene Stellungen einzunehmen vermag, nämlich eine erste Stellung, in welcher die wenigstens eine Rolle (9) oder das wenigstens eine Paar (11, 14) von Rollen (9) im normalen Führungszustand mit ihrer/ihren Lauffläche(n), ihrer/ihren Rollfläche(n) oder ihrem/ihren rollenden Umfang/Umfängen auf der wenigstens einen Führungsschiene (3) rollt bzw. rollen, sowie eine zweite Stellung, in welcher ein anderer Teil der Führungseinheit (2), z.B. der Rolle(n) oder einer vorstehenden Fläche des Trägers der Rollen, im entgleisten Zustand auf der Führungsschiene (3) oder auf der Straße rollt oder reibt, **dadurch gekennzeichnet, dass**

- die Vibrationscharakteristika des rollenden Umfangs der Rolle oder der Rollen im normalen Rollkontakt mit der Führungsschiene (3) während der Führung von jenen der Kontaktzone mit der Führungsschiene (3) oder der Straße im entgleisten Zustand verschieden sind,

- das System (1) zur dynamischen Überwachung einen Vibrationssensor (5), welcher nahe der wenigstens einen Rolle (9) oder des wenigstens einen Paares (11, 14) von Führungsrollen (9) angeordnet ist, sowie einen Näherungssensor (7) aufweist, und

- das System (1) zur dynamischen Überwachung eine Einheit zur Verarbeitung und Untersuchung der von den Sensoren (5, 7) oder von Schaltkreisen, in welchen sie angeordnet sind, stammenden Signale aufweist, um sie permanent zu untersuchen und festzustellen, ob jene des Vibrationssensors (5) und jene des Näherungssensors (7) jeweils eine erste und eine zweite Warnschwelle überschreiten, so dass eine Warnmeldung der Entgleisung ausgegeben wird, wenn die beiden Warnschwellen überschritten worden sind.

2. Führungseinheit (2) nach Anspruch 1, **dadurch gekennzeichnet, dass** die Steifigkeit des Teils der Rolle oder der Rollen, welcher während der Führung mit der Schiene im normalen Rollkontakt steht, geringer ist als die Steifigkeit der Kontaktzone mit der Schiene oder mit der Straße im entgleisten Zustand.

3. Führungseinheit (2) nach Anspruch 1, **dadurch gekennzeichnet, dass** der vorstehende Teil die Nase einer jeweiligen Rolle oder ein Gehäuse oder eine stationäre Rotationsfläche an dem Träger der Rollen ist.

4. Führungseinheit (2) nach Anspruch 1, **dadurch gekennzeichnet, dass** die Überschreitung der ersten Warnschwelle einem Fehler des Vibrationssensors (5) entspricht.

5. Führungseinheit (2) nach Anspruch 1, **dadurch gekennzeichnet, dass** der Näherungssensor (7) ein Näherungssensor der oberen Fläche der Führungsschiene (3) ist.

6. Führungseinheit (2) nach Anspruch 1, **dadurch gekennzeichnet, dass** des Näherungssensor (7) ein induktiver Sensor (8) ist.

7. Führungseinheit (2) nach Anspruch 1, **dadurch gekennzeichnet, dass** der Vibrationssensor (5) ein Beschleunigungssensor (6) ist.

8. Führungseinheit (2) nach Anspruch 1, **dadurch gekennzeichnet, dass** eine Schwelle in Abhängigkeit der Geschwindigkeit des Fahrzeugs festgelegt ist.

9. Führungseinheit (2) nach dem vorangehenden Anspruch, **dadurch gekennzeichnet, dass** die Schwelle in Abhängigkeit der Geschwindigkeit des Fahrzeugs verändert wird, wenn die Geschwindigkeit des Fahrzeugs mehr als 15 km/h beträgt.

10. Führungseinheit (2) nach Anspruch 1, **dadurch gekennzeichnet, dass** die Einheit zur Verarbeitung und Untersuchung der von den Sensoren stammenden Signale eine Einheit zur Verarbeitung und Untersuchung des Frequenzspektrums ist.

11. Führungseinheit (2) nach Anspruch 10, **dadurch gekennzeichnet, dass** die Einheit zur Verarbeitung und Untersuchung der von dem Vibrations- (5) und dem Näherungssensor (7) übermittelten Signale einen Beschleunigungskanal VACC mit einem Modul zur Vibrationsverarbeitung MODVI sowie einen parallelen induktiven Kanal VINDU mit einem Modul zur induktiven Verarbeitung MODIN aufweist, dass die Verarbeitungsmodule einerseits mit den Vibrationssensoren (5) vorne und hinten AccAV und AccAR bzw. andererseits mit den Näherungssensoren (7) vorne und hinten CiAV und CiAR verbunden sind, dass sie verschiedene Ausgänge aufweisen, von welchen jeweils ein Ausgang EtCAP eine Information über den Zustand der Sensoren liefert und von welchen jeweils ein Haupt-Ausgang in einen mehrkanaligen Warnmeldungsblock BALAM mündet, und dass das Modul zur Vibrationsverarbeitung MODVI die Informationen über die Geschwindigkeit VI sowie die Signale der Vibrationssensoren (5) vorne und hinten AccAV und AccAR empfängt und sich aus zwei Blöcken zur Verarbeitung und Untersuchung ausgehend von Vibrationsfrequenzbereichen zusammensetzt: einem ersten Niederfrequenz-Block BABF und einem benachbarten Mittelfrequenz-Block BAMF.

12. Führungseinheit (2) nach dem vorangehenden Anspruch, **dadurch gekennzeichnet, dass** die Verarbeitungsblöcke BABF und BAMF mit dem von dem oder den Vibrationssensor(en) (5) gemessenen Signal SGAME versorgt werden.

13. Führungseinheit (2) nach den Ansprüchen 11 und 12, **dadurch gekennzeichnet, dass** der erste Block BABF zwei Kanäle aufweist, nämlich einen ersten Kanal einer Mittelstufe von tiefen Niederfrequenzen RMSBFI sowie einen zweiten Kanal einer Mittelstufe von hohen Niederfrequenzen RMSBFS, dass ein jeweiliger Kanal von einem Bandpass-Filter F1 im Frequenzbereich B1 von 1 bis 80 Hz bzw. von einem Bandpass-Filter F2 mit einem Frequenzbereich B2 von 80 bis 200 Hz ausgeht, welchen jeweils ein Modul zur Messung des Niveaus der Effektivspannung aus den tiefen Niederfrequenzen B1 Modul RMSB1 bzw. aus den hohen Niederfrequenzen BS Modul RMSB2 nachgeordnet ist, und dass die beiden Niveaus in einem Differenzierungsmodul RMSB1B2 verglichen werden, um für den Fall, dass ihre Differenz ein vorgegebenes Niveau übertrifft, eine Beschleunigungs-Warnmeldung ALACC auszulösen.

14. Führungseinheit (2) nach dem vorangehenden Anspruch, **dadurch gekennzeichnet, dass** der benachbarte Untersuchungsblock der Mittelfrequenzen BAMF ebenfalls mit dem von dem oder den Vibrationssensor (en) (5) gemessenen Signal SGAME versorgt wird, dass sie einen Kanal aufweist, welcher aus einem Bandpass-Filter im hohen Mittelfrequenzbereich F3 im Frequenzbereich B3 von 150 bis 1000 Hz zusammengesetzt ist, welchem ein Modul zur Messung des Niveaus der Effektivspannung der hohen Mittelfrequenzen B3 Modul RMSB3 nachgeordnet ist, dass dieses Niveau in einem Vergleichsglied COMB3 mit einer Schwelle S verglichen wird, dass, wenn diese Schwelle S je nachdem, ob man sich oberhalb oder unterhalb einer minimalen Geschwindigkeit Vmin des Fahrzeugs befindet, verschieden ist, mittels eines Encoders ein unterschiedlicher Wert der Schwelle S zugewiesen wird, wenn die Geschwindigkeit des Fahrzeugs geringer oder höher ist als Vmin, wobei das Vergleichsglied COMB3 ein Warnsignal ausgibt, wenn das Niveau der Effektivspannung des Signals B3 oberhalb des Wertes der Schwelle S liegt, und dass die beiden Warnsignale der beiden Verarbeitungsblöcke mittels eines logischen Blocks OU auf dem Kanal der Beschleunigungs-Warnmeldung ALACC autorisiert werden.

## Claims

1. Guiding assembly (2) for a land vehicle along at least one guide rail (3), the guiding assembly (2) being provided with a dynamic control system (1) for contact with the rail, the guiding assembly (2) being formed by at least one roller (9) or at least one pair (11, 14) of guide rollers (9) rolling along the at least one guide rail (3), the guiding assembly (2) having two different states, a first state in which the at least one roller (9) or the at least one pair (11, 14) of rollers roll(s) over the at least one guiding rail (3) via their web, their rolling surface or their rolling periphery in a normal guiding situation and a second state in which another portion of the guiding assembly (2), for example, of the roller(s) or a prominent surface of the support of the rollers rolls or rubs on the guide rail (3) or on the roadway in the event of derailing, **characterised in that**, the vibration characteristics of the rolling periphery of the roller or the rollers in normal rolling contact with the guide rail (3) during the guiding and those of the zone in contact with the guide rail (3) or the roadway in the event of derailing being different, the dynamic control system (1) comprises a vibration sensor (5) which is located close to the at least one roller (9) of the at least one pair (11, 14) of guide rollers (9) and a proximity sensor (7), and the dynamic control system (1) comprises a unit for processing and analysing signals originating from these sensors (5, 7) or circuits in which they are placed in order to analyse them and to permanently determine whether the ones originating from the vibration sensor (5) and the ones originating from the proximity sensor (7) exceed a first and a second warning threshold, respectively, so that, if the two thresholds are exceeded, a derailment warning is transmitted.

2. Guiding assembly (2) according to claim 1, **characterised in that** the stiffness of the portion of the roller or rollers in normal rolling contact with the rail during guiding is less than the stiffness of the zone in contact with the rail or the roadway in the event of derailment.

3. Guiding assembly (2) according to claim 1, **characterised in that** the prominent portion is the flange of each roller or a housing or a surface fixed in terms of rotation on the roller support.

4. Guiding assembly (2) according to claim 1, **characterised in that** exceeding the first warning threshold corresponds to a defect of the vibration sensor (5).

5. Guiding assembly (2) according to claim 1, **characterised in that** the proximity sensor (7) is a proximity sensor of the upper surface of the guide rail (3) .

6. Guiding assembly (2) according to claim 1, **characterised in that** the proximity sensor (7) is an inductive sensor (8).

7. Guiding assembly (2) according to claim 1, **characterised in that** the vibration sensor (5) is an accelerometer (6).

8. Guiding assembly (2) according to claim 1, **characterised in that** a threshold is established in accordance with the speed of the vehicle.

9. Guiding assembly (2) according to the preceding claim, **characterised in that** the threshold as a function of the speed of the vehicle is modified if the speed of the vehicle is greater than 15 km/h.

10. Guiding assembly (2) according to claim 1, **characterised in that** the unit for processing and analysing the signals from the sensors is a unit for processing and analysing the frequency spectrum.

11. Guiding assembly (2) according to claim 10, **characterised in that** the unit for processing and analysing signals supplied by the vibration sensor (5) and proximity sensor (7) comprises in parallel an accelerometer channel VACC comprising a vibration processing module, MODVI, and an inductive channel, VINDU, with an inductive processing module, MODIN, **in that** the processing modules are connected to the front and rear vibration sensors (5), AccAV and AccAR, respectively, on the one hand, and to the front and rear proximity sensors (7), CiAV and CiAR, on the other hand, **in that** they comprise various outputs, including for each an EtCAP output supplying information relating to the state of the sensors, and for each a main output terminating at a multi-channel alarm unit BALAM, and **in that** the vibration processing module MODVI receives the speed information VI and the signals from the front and rear vibration sensors (5), AccAV and AccAR, and is composed of two processing and analysis units from vibration frequency ranges: a first low-frequency unit BABF and an adjacent medium-frequency unit BAMF.

12. Guiding assembly (2) according to the preceding claim, **characterised in that**, from the signal of the vibration sensor(s) measured, SGAME, the processing units BABF and BAMF are supplied.

13. Guiding assembly (2) according to claims 11 and 12, **characterised in that** the first unit BABF comprises two channels, a first medium level channel for lower low frequencies, RMSBFI, and a second medium level channel for higher low frequencies, RMSBFS, **in that** each channel begins with a low-pass filter, F1, in the 1 to 80 Hz range, B1, and a band-pass filter, F2, in the 80 to 200 Hz range, B2, respectively, which are followed by a module for measurement of the level of the effective voltage, respectively, in lower low frequencies, B1, module RMSB1, and higher low frequencies, B2, module RMSB2, **in that** the two levels are compared in a differentiation module, RMSB1B2, so that if their difference is greater than a given level, an accelerometer warning ALACC is triggered.

14. Guiding assembly (2) according to the preceding claim, **characterised in that** the adjacent unit for analysis of medium frequencies, BAMF, is also supplied by the signal from the measured vibration sensor(s) (5), SGAME, **in that** it has a channel composed of a higher medium-frequency band-pass filter, F3, in the 150 to 1000 Hz range, B3, followed by a module for measurement of the effective level of the voltage of the higher medium frequencies, B3, module RMSB3, **in that** this level is compared with a threshold S in a comparator, COMB3, **in that**, if this threshold S differs **in that** it is above or below a minimum speed of the vehicle, Vmin, an encoder assigns a different value of the threshold S if the speed of the vehicle is lower or higher than Vmin, the comparator COMB3 transmits a warning signal if the effective level of the voltage of the signal B3 is higher than the value of the threshold S **in that** the two warning signals of the two processing units are enabled on the ALACC accelerometer warning channel by a logical OR unit.

*FIG.1*

*FIG.2*

# FIG.3

## FIG.4

## FIG.5

## FIG.6

## FIG.7

## FIG.8

## FIG.9

**EP 2 771 219 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2461148 A